# EUROPÄISCHE PATENTANMELDUNG

(11) **EP 3 695 956 A1**
(43) Veröffentlichungstag der Anmeldung: **19.08.2020**
(21) Anmeldenummer: 20157438.1
(22) Anmeldetag: 14.02.2020
(51) Int. Cl.: B29C 70/08, B29C 70/46, B29C 37/00, B29L 31/00

(54) **VERFAHREN ZUR HERSTELLUNG EINER SANITÄRKOMPONENTE, SANITÄRKOMPONENTE, WERKZEUG ZUR HERSTELLUNG EINER SANITÄRKOMPONENTE**

(30) Priorität: 15.02.2019 DE 102019202074; 25.02.2019 DE 102019202522; 04.03.2019 DE 102019105441
(71) Anmelder: MKW Kunstsstofftechnik GmbH, 4675 Weibern (AT)
(72) Erfinder: DANNER, Stefan, 4675 Weibern (AT)
(74) Vertreter: Kilian Kilian & Partner

(57) **Zusammenfassung**

Die Erfindung betrifft ein Verfahren zur Herstellung einer Sanitärkomponente, wobei die Sanitärkomponente ein WC-Sitz, ein WC-Deckel oder ein Deckel eines Urinals ist, wobei das Verfahren folgende Schritte aufweist:
a) Öffnen einer Werkzeugform (2), die eine Kavität definiert, wobei die Kavität einer Form der Sanitärkomponente entspricht;
b) Beschichten einer die Kavität definierenden Innenoberfläche der Werkzeugform (2) mit einem Beschichtungsmaterial;
c) Füllen der Kavität mit einem nicht ausgehärteten Faser-Kunststoff-Verbundmaterial, wobei sich das Faser-Kunststoff-Verbundmaterial mit dem Beschichtungsmaterial verbindet;
d) Öffnen der Werkzeugform (2) und Entnehmen der Sanitärkomponente nach zumindest teilweisem Aushärten des Faser-Kunststoff-Verbundmaterials, wobei das Beschichtungsmaterial eine Außenoberfläche der Sanitärkomponente bildet.

## Beschreibung

Die vorliegende Erfindung betrifft ein Verfahren zur Herstellung einer Sanitärkomponente, wobei es sich bei der Sanitärkomponente um einen WC-Sitz, WC-Deckel, oder einen Deckel eines Urinals handelt. Weiterhin betrifft die Erfindung eine solche Sanitärkomponente und ein Werkzeug zu dessen Herstellung.

Sanitärkomponenten, wie beispielsweise WC-Sitze, WC-Deckel oder Urinal-Deckel sind im Stand der Technik allgemein bekannt.

Seit geraumer Zeit zeichnet sich bei solchen Sanitärkomponenten der Trend zu sehr filigranen und dünnen Strukturen ab. Im allgemeinen werden diesem Trend folgende Sanitärkomponenten als "Flat-Designs" bezeichnet.

Gewöhnlich für Sanitärkomponenten eingesetzte Kunststoffe, wie beispielsweise Harnstoffharze "UREA", kommen bei solchen filigranen und dünnen Strukturen an ihre Grenzen. Zum einen werden notwendige Steifigkeiten nicht mehr erreicht, zum anderen verziehen sich die entsprechenden Sanitärkomponenten aufgrund zu hoher Wasseraufnahme.

Um diesen Nachteilen entgegenzuwirken, ist es bekannt, Sanitärkomponenten aus anderen Materialien zu fertigen, die zu einer höheren Steifigkeit der Sanitärkomponente führen und eine geringere Wasseraufnahme zeigen. Bei solchen Materialien handelt es sich um BMC/SMC.

BMC/SMC-Materialien sind in ihrer Grundform ein Gemisch aus Verstärkungsfasern und einem Harzmaterial, das bei Temperaturbeaufschlagung aushärtet. Der Unterschied zwischen BMC und SMC liegt darin, dass Ersteres als formlose Masse vorliegt, wohingegen Letzteres plattenförmig ausgebildet ist.

Diese Materialien werden bei der Herstellung von Sanitärkomponenten in eine entsprechende Form gepresst und nach Aushärten aus dieser wieder entnommen. Die so hergestellten Sanitärkomponenten zeichnen sich durch sehr gute Eigenschaften hinsichtlich Stabilität und Wasseraufnahme aus.

Problematisch hingegen ist die Oberflächenbeschaffenheit der entsprechend hergestellten Sanitärkomponenten. Die Oberflächen genügen notwendigen Anforderungen nicht, weder in Bezug auf eine homogene Farbgebung oder Härtegrad noch in Bezug auf im Sanitärbereich geforderte Chemikalienbeständigkeit.

Weitere notwendige Verarbeitungsschritte sind die Folge, wie beispielsweise Schleifen, Lackieren und Versiegeln der Sanitärkomponente. All diese Schritte erhöhen den Herstellungsaufwand erheblich, sodass Sanitärkomponenten im genannten Flat-Design bislang auf dem Markt nicht erhältlich sind.

Vor diesem Hintergrund ist es Aufgabe der vorliegenden Erfindung, ein Verfahren zur Herstellung einer Sanitärkomponente aus einem Faser-Kunststoff-Verbundmaterial zu schaffen, mit dem auf einfache Art und Weise Oberflächen mit entsprechenden Eigenschaften erzielt werden können.

Diese Aufgabe wird mit einem Verfahren gemäß Patentanspruch 1 gelöst. Bevorzugte Ausführungsformen sind Gegenstand der abhängigen Patentansprüche.

*Das erfindungsgemäße Verfahren dient zur Herstellung einer Sanitärkomponente, wobei die Sanitärkomponente ein WC-Sitz, ein WC-Deckel oder ein Deckel eines Urinals ist.*

*Das erfindungsgemäße Verfahren beinhaltet hierzu folgende Schritte:*
*a) Öffnen einer Werkzeugform, die eine Kavität definiert, wobei die Kavität einer Form der Sanitärkomponente entspricht;*
*b) Beschichten einer die Kavität definierenden Innenoberfläche der Werkzeugform mit einem Beschichtungsmaterial;*
*c) Füllen der Kavität mit einem nicht ausgehärteten Faser-Kunstharz-Material, wobei sich das Faser-Kunstharz-Material mit dem Beschichtungsmaterial verbindet;*
*d) Entnehmen der Sanitärkomponente nach zumindest teilweisem Aushärten des Faser-Kunstharz-Materials in der Kavität zu einem Faser-Kunststoff-Verbundmaterial, wobei das Beschichtungsmaterial eine Außenoberfläche der Sanitärkomponente bildet.*

Die herzustellende Sanitärkomponente kann ein WC-Sitz, ein WC-Deckel oder ein Deckel eines Urinals sein.

Der WC-Sitz betrifft den Teil einer WC-Sitzgarnitur, der in der Regel an einer WC-Keramik schwenkbar befestigt wird und auf dem eine Person während des Stuhlgangs direkt sitzt. Man bezeichnet den nach dem erfindungsgemäßen Verfahren hergestellten WC-Sitz umgangssprachlich auch als WC-Brille oder Toilettenbrille.

Der nach dem erfindungsgemäßen Verfahren hergestellte WC-Deckel betrifft den Teil einer WC-Sitzgarnitur, der ebenfalls an einer WC-Keramik sowohl gegenüber der WC-Keramik als auch einem entsprechenden WC-Sitz schwenkbar befestigt wird und der so geschwenkt werden kann, dass er auf dem WC-Sitz lagert und die WC Keramik hierdurch abdeckt.

Der letztendlich nach dem erfindungsgemäßen Verfahren hergestellte Deckel des Urinals wird bestimmungsgemäß an einem an einer Wand befestigten Urinal schwenkbar so angebracht, dass ein Benutzer eine Öffnung des Urinals öffnen oder schließen kann.

Die in dem Schritt a) des erfindungsgemäßen Verfahrens verwendete Werkzeugform ist bevorzugt aus einem Metall oder Metalllegierung, wie beispielsweise Stahl gefertigt, und definiert die genannte Kavität. In Abhängigkeit davon, ob der WC-Sitz, WC-Deckel oder der Urinal-Deckel zu fertigen ist, besitzt die Kavität die entsprechende Form. Die Kavität ist anders ausgedrückt ein Hohlraum in der Werkzeugform, der die Erscheinungsform der zu fertigenden Sanitärkomponente festlegt.

Das in dem Schritt c) verwendete Faser-Kunstharz-Material beinhaltet, wie im Folgenden noch erläutert, ein Kunstharz-Material, in dem entsprechende Verstärkungsfasern enthalten bzw. eingebettet sind.

Das Kunstharz-Material ist beispielsweise ein Kunststoffharz, das zu einem Duroplast ausgehärtet werden kann, oder ein Thermoplast.

Die Verstärkungsfasern sind beispielsweise Glasfasern, können allerdings auch aus einem anderen Material gefertigt sein.

Das verwendete Faser-Kunstharz-Material ist insbesondere BMC/SMC, bei dem die Verstärkungsfasern mit dem noch nicht ausgehärteten (bevorzugt duroplastischen) Kunststoffharz gemischt sind und das entsprechend - als nicht ausgehärtetes, teigartiges Gemisch - verarbeitungsfertig vorliegt. Die Verstärkungsfasern können als Schnittfasern (Faserschnipsel) oder bei SMC auch als Matte oder Gelege in dem Gemisch enthalten sein.

Bevorzugte in dem BMC/SMC enthaltene Kunstharz-Materialen sind beispielsweise Polyester-Harze oder Vinylester-Harze, wobei Ersteres besonders bevorzugt ist, wie es im Folgenden noch erläutert wird.

In dem Schritt c) des erfindungsgemäßen Verfahrens wird die Kavität mit dem Faser-Kunstharz-Material gefüllt, indem das Faser-Kunstharz-Material in die Kavität gespritzt oder besonders bevorzugt gepresst wird. BMC eignet sich beispielsweise sowohl für das Einspritzen als auch für das Pressen in die Kavität, SMC hingegen aufgrund seiner flächigen Ausbildung für das Pressen.

Der Schritt b) ist der wesentliche Schritt der Erfindung. Die die Kavität festlegende Innenoberfläche der Werkzeugform wird erfindungsgemäß mit einem Beschichtungsmaterial beschichtet, das sich in dem erfindungsgemäßen Verfahren mit dem Faser-Kunstharz-Material verbindet und nach der Entnahme der Sanitärkomponente aus der Werkzeugform die Außenoberfläche ausbildet. Die Innenoberfläche kann bei Bedarf teilweise oder vollständig beschichtet werden.

Das erfindungsgemäße Verfahren ermöglicht demnach, die Sanitärkomponente nicht nur zu formen, indem das Faser-Kunstharz-Material, insbesondere das BMC/SMC, in die Kavität eingebracht und ausgehärtet wird, sondern zusätzlich auch seine Oberfläche durch geeignete Wahl des Beschichtungsmaterials zu realisieren.

Das in dem Schritt b) verwendete Beschichtungsmaterial kann flexibel je nach spezifischer Anforderung der finalen Sanitärkomponente gewählt werden. Insbesondere lassen sich Beschichtungsmaterialen wählen, die nach Entnahme der Sanitärkomponente aus der Werkzeugform die Außenoberfläche mit solchen Eigenschaften bilden, dass diese Anforderungen an Härtegrad, Kratzfestigkeit, Oberflächenrauigkeit und/oder Chemikalienbeständigkeit erfüllt.

Die die Kavität festlegende Innenoberfläche der verwendeten Werkzeugform besitzt solche Eigenschaften, dass das Beschichtungsmaterial bei Entnahme der Sanitärkomponente nicht haften bleibt bzw. sich abheben lässt, ohne dass es zu Beschädigungen der Außenoberfläche der Sanitärkomponente kommt. Bei Bedarf kann die Innenoberfläche vor dem Schritt b) gesondert mit einem Trennmittel behandelt werden, welches das Herauslösen der Sanitärkomponente aus der Werkzeugform erleichtert. Alternativ kann das Trennmittel in dem Beschichtungsmaterial als Bestandteil enthalten sein.

Bei dem erfindungsgemäßen *Verfahren wird bevorzugt in Schritt b) die Innenoberfläche beschichtet, indem ein das Beschichtungsmaterial bildender Pulverlack auf die Innenoberfläche der Werkzeugform gesprüht wird.* Hierbei wird bevorzugt *in Schritt b) die Werkzeugform auf ein elektrisches Potential, vorzugsweise Massepotential, gelegt und der Pulverlack elektrisch aufgeladen, vorzugsweise positiv aufgeladen, auf die Innenoberfläche der Werkzeugform gesprüht, wodurch der Pulverlack auf der Innenoberfläche der Werkzeugform haftet.*

Bevorzugt können Pulverlacke als das Beschichtungsmaterial fungieren.

Diese lassen sich einfach verarbeiten, insbesondere zusammen mit Faser-Kunstharz-Materialen, wie beispielsweise BMC/SMC. Dies deshalb, weil sich Verfahrensparameter, wie beispielsweise Temperatur, gut aufeinander abstimmen lassen.

Außerdem sind Pulverlacke erhältlich, die in gänzlich anderen technischen Gebieten Einsatz finden, wie beispielsweise dem Fassadenbau, aber aufgrund der dort bestehenden Anforderungen sich gut für die Herstellung der Sanitärkomponente eigenen, insbesondere mit Blick auf Härtegrad, Kratzfestigkeit, Oberflächenrauigkeit und/oder Chemikalienbeständigkeit.

Der in dem Verfahren verwendete Pulverlack beinhaltet als funktionale Bestandteile zumindest ein Bindemittel, das auf einem Polymer basiert, und Farbpigmente. Letztere verleihen dem Pulverlack seine Farbgebung. Zusätzlich kann bevorzugt noch das genannte Trennmittel in dem Pulverlack als Bestandteil enthalten sein. Weiterhin zusätzlich können in dem eingesetzten Pulverlack noch Additive und Füllstoffe enthalten sein.

Geeignete Pulverlacke besitzen Bindemittel beispielsweise auf Basis von Polyestern, beispielsweise ungesättigte Polyesterharze, Polyurethanen, Acrylatharzen, Epoxidharzen oder Fluorpolymeren. Denkbar sind auch Hybrid-Pulverlacke, bei denen Epoxid- und Polyesterharze kombiniert sind.

Durch Zugabe geeigneter Farbpigmente können alle gängigen Farben und/oder auch Farbeeffekte mit diesen Pulverlacken realisiert werden.

Die Beschichtung der Innenoberfläche der Werkzeugform erfolgt bevorzugt dadurch, dass der Pulverlack elektrisch aufgeladen, insbesondere elektrostatisch aufgeladen, auf die Innenoberfläche der Werkzeugform gesprüht wird. Die Werkzeugform liegt bevorzugt auf umgekehrten Potenzial im Vergleich zu der Aufladung des Pulverlackes.

Die elektrische Aufladung des Pulverlackes erfolgt bevorzugt an einer den Pulverlack versprühenden Sprüheinrichtung. Beispielsweise ist die Aufladung des Pulverlackes durch Hochspannung (Corona-Aufladung) oder Reibung (triboelektrische Aufladung) an der Sprüheinrichtung möglich.

Die Sprüheinrichtung kann beispielsweise eine manuell zu betätigende Pulversprühpistole oder Automatiksprühpistole sein. Letztere wird bevorzugt durch eine Robotereinrichtung gezielt geführt, wie es im Folgenden noch erläutert wird.

Der aufgeladene Pulverlack haftet bei Auftreffen auf die Werkzeugform an der Innenoberfläche, sodass die entsprechende Schicht zum einen nicht verläuft und zum anderen bei dem in Schritt c) Füllen der Kavität ortsfest bleibt. Hierdurch lassen sich gute Außenoberflächen der Sanitärkomponente reproduzierbar erzielen.

Außerdem lassen sich Schichten mit verschiedenen Dicken insbesondere gleichmäßig erzeugen.

Diesbezüglich wird bei dem erfindungsgemäßen *Verfahren in Schritt b) die Innenoberfläche der Werkzeugform mit dem Pulverlack derart beschichtet, dass eine Schichtdicke D des Pulverlackes in folgenden Bereichen liegt:*
*i. 40µm* ≤ *D* ≤ *OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;*
*ii. 45µm* ≤ *D* ≤ *OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;*
*iii. 50µm* ≤ *D* ≤ *OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;*
*iv. 55µm* ≤ *D* ≤ *OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;*
*v. 60µm* ≤ *D* ≤ *OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;*
*vi. 65µm* ≤ *D* ≤ *OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;*
*vii. 70µm* ≤ *D* ≤ *OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist; oder*
*viii. 75µm* ≤ *D* ≤ *OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist.*

*Weiterhin bevorzugt ist bei dem erfindungsgemäßen Verfahren in Schritt b) die Werkzeugform aufgeheizt auf eine Temperatur T, bei der der Pulverlack aufschmilzt und das in Schritt c) eingefüllte Faser-Kunstharz-Material aushärtet.*

In dieser bevorzugten Variante des erfindungsgemäßen Verfahrens zeigt sich die gute Kombinierbarkeit von Pulverlacken und Faser-Kunstharz-Materialen, insbesondere BMC/SMC.

Pulverlacke werden bei ihrer Verarbeitung einem sogenannten Einbrennen unterzogen. Hierbei wird der entsprechende Pulverlack aufgeheizt, wobei der Vernetzungsvorgang mit dem Aufschmelzen einsetzt. Anschließend wird der Pulverlack auf einer bestimmten Temperatur für eine bestimmte Zeitdauer gehalten, wobei der aufgeschmolzene Pulverlack über die bestimmte Zeitdauer zu einer Pulverlackschicht aushärtet.

In dem erfindungsgemäßen Verfahren kann die Werkzeugform zeitlich vor, während oder nach dem Schritt b) auf die entsprechende Temperatur aufgeheizt werden. Die Werkzeugform wird nach ihrer Aufheizung bevorzugt konstant, über das Verfahren hinweg, auf der Temperatur gehalten, bis der Pulverlack und das Faser-Kunstharz-Material, insbesondere das BMC/SMC, zu dem Faser-Kunststoff-Verbundmaterial soweit gehärtet sind, dass in dem Schritt d) die Sanitärkomponente entnommen werden kann.

Faser-Kunstharz-Materialen wie SMC und BMC härten insbesondere bei Temperaturbeaufschlagung bzw. Aufheizen aus. Insoweit dient die aufgeheizte Werkzeugform nicht nur der Vernetzung des Bindemittels des Pulverlackes, sondern auch der Aushärtung des Faser-Kunstharz-Materials, insbesondere des BMC/SMC, zu dem Faser-Kunststoff-Verbundmaterial.

Das Faser-Kunstharz-Material wird in dem Schritt c) insbesondere zu einem Zeitpunkt in die Kavität gefüllt, zu dem der Pulverlack aufgeschmolzen ist und bevorzugt seine Viskosität ein Minimum erreicht hat oder sich in der Nähe des Minimums befindet. In diesem Zustand verbinden sich der Pulverlack und das Faser-Kunstharz-Material, insbesondere das BMC/SMC, sehr gut, so dass nach Aushärten des Pulverlackes zu der Pulverlackschicht/ des Faser-Kunstharz-Materials zu dem Faser-Kunststoff-Verbundmaterial eine gute Verbindung zwischen der entstandenen Pulverlackschicht und dem Faser-Kunststoff-Verbundmaterial besteht.

Die Temperatur, auf die die Werkzeugform aufgeheizt wird, kann für beide Vorgänge gleichermaßen eingestellt werden. In dem erfindungsgemäßen Verfahren beträgt die Temperatur T der Werkzeugform bevorzugt:
*120°C, 121°C, 122°C, 123°C, 124°C, 125°C, 126°C, 127°C, 128°C, 129°C, 130°C, 131°C, 132°C, 133°C, 134°C, 135°C, 136°C, 137°C, 138°C, 139°C, 140°C, 141°C, 142°C, 143°C, 144°C, 145°C, 146°C, 147°C, 148°C, 149°C, 150°C, 151°C, 152°C, 153°C, 154°C, 155°C, 156°C, 157°C, 158°C, 159°C, 160°C, 161°C, 162°C, 163°C, 164°C, 165°C, 166°C, 167°C, 168°C, 169°C, 170°C, 171°C, 172°C, 174°C, 175°C, 176°C, 177°C, 178°C, 179°C, oder 180°C.*

Je höher die Temperatur gewählt wird, desto schneller laufen die Vernetzung des Pulverlackes und die Aushärtung des BMC/SMC ab. Die Verfahrensschritte b) und c) sind demnach zeitlich aufeinander abzustimmen und hintereinander umso schneller durchzuführen, je höher die Temperatur gewählt wird. Insbesondere lassen sich bei den angegebenen Temperaturen wirtschaftlich gut vertretbare Taktzeiten der Schritte a)-d) des erfindungsgemäßen Verfahrens erreichen.

*Bei dem erfindungsgemäßen Verfahren ist die Werkzeugform aus einer Vielzahl von Werkzeugformteilen aufgebaut, wobei jedes der Werkzeugformteile die Kavität zumindest teilweise definiert.*

In dieser bevorzugten Ausgestaltung des Verfahrens wird die Sanitärkomponente insbesondere gepresst, wobei eines der Werkzeugformteile beispielsweise ein Negativ-Werkzeugformteil mit konkaven Strukturen, die die Kavität teilweise definieren, und das andere Werkzeugformteil beispielsweise ein Positiv-Werkzeugformteil mit konvexen Strukturen, die die Kavität teilweise definieren, ist. Bei Zusammenfahren der Werkzeugformteile bilden die genannten Strukturen die Kavität aus.

*In Schritt a) wird die Werkzeugform geöffnet, indem die Werkzeugformteile auseinandergefahren werden, sodass die Kavität zugänglich ist.*

*In Schritt b) wird anschließend der Pulverlack auf die Werkzeugformteile gesprüht, derart, dass Abschnitte der Innenoberfläche, die durch die Werkzeugformteile, insbesondere die genannten konvexen*/*konkaven Strukturen, jeweils definiert werden, mit dem Pulverlack beschichtet sind, wobei vor, während oder nach dem Besprühen der Werkzeugformteile mit dem Pulverlack diese auf die Temperatur T aufgeheizt werden.*

In diesem Schritt b) wird ergo die gesamte Innenoberfläche der Kavität beschichtet, sodass die finale Sanitärkomponente mit der die Außenoberfläche bildenden Pulverlackschicht vollständig umhüllt bzw. beschichtet ist.

*In Schritt c) wird die Kavität anschließend gefüllt, indem das Faser-Kunstharz-Material auf mindestens eines der Werkzeugformteile aufgebracht wird und anschließend die Werkzeugformteile zusammengefahren werden, so dass das Faser-Kunstharz-Material, insbesondere das BMC*/*SMC, in die Kavität gepresst wird, wodurch es die Form der Sanitärkomponente annimmt und sich mit dem aufgeschmolzenen Pulverlack verbindet.*

Die in dem Schritt c) ausgeübte Presskraft beträgt bevorzugt mehrere kN (Kilonewton), insbesondere zwischen 2500 kN und 4000 kN.

Es hat sich in Tests herausgestellt, dass auf Polyesterharz basierendes BMC/SMC und auf Polyesterharz basierender Pulverlack sich für das erfindungsgemäße Verfahren besonders gut eignen.

*Demnach wird das erfindungsgemäße Verfahren bevorzugt durchgeführt, wobei der in Schritt b) verwendete Pulverlack ein Bindemittel aufweist, das Polyesterharz beinhaltet, insbesondere das Bindemittel hierauf basiert; und das in Schritt c) verwendete Faser-Kunstharz-Material aus einem Verstärkungsfasern einbettenden Kunstharz-Material gebildet ist, wobei das Kunstharz-Material ein Polyesterharz beinhaltet.*

*Das erfindungsgemäße Verfahren wird bevorzugt automatisiert durchgeführt, wobei in Schritt b) der Pulverlack von einer Robotereinrichtung auf die Innenoberfläche gesprüht wird, und*
*die Robotereinrichtung die Werkzeugform einer programmierten Bahn folgend abfährt, derart, dass die Schichtdicke D auf der Innenoberfläche gleichmäßig ist.*

Die Erfindung betrifft gleichermaßen eine *Sanitärkomponente, welche erhältlich ist nach dem Verfahren, wie es vorstehend erläutert wurde.*

*Außerdem betrifft die Erfindung ein Werkzeug zur Herstellung einer Sanitärkomponente, wobei die Sanitärkomponente ein WC-Sitz, ein WC-Deckel oder ein Deckel eines Urinals ist, beinhaltend:*
*eine bevorzugt beheizbare Werkzeugform, die eine Kavität definiert, wobei die Kavität einer Form der Sanitärkomponente entspricht, wobei die Werkzeugform eine Vielzahl von Werkzeugformteile aufweist, die zum Öffnen und Schließen der Kavität auseinander*/*zusammengefahren werden können; und*
*eine Sprüheinrichtung, insbesondere eine robotergeführte Sprüheinrichtung, die dazu eingerichtet ist, einen, bevorzugt positiv, elektrisch*/*elektrostatisch geladenen Pulverlack auf eine die Kavität festlegende Innenoberfläche der Werkzeugform, die bevorzugt auf Massepotential liegt, zu sprühen; wobei*
*das Werkzeug eingerichtet ist, ein Verfahren, wie es vorstehend erläutert wurde, durchzuführen.*

Im Folgenden wird eine bevorzugte Ausführungsform des erfindungsgemäßen Verfahren unter Bezug auf die beigefügten Figuren erläutert.

Es zeigt:
**Figur 1** einen Verfahrensschritt b) des erfindungsgemäßen Verfahrens, in dem eine Robotereinrichtung ein Positiv-Werkzeugformteil mit einem Pulverlack einsprüht bzw. beschichtet;
**Figur 2** einen Verfahrensschritt b) des erfindungsgemäßen Verfahrens, in dem eine Robotereinrichtung ein Negativ-Werkzeugformteil mit einem Pulverlack einsprüht bzw. beschichtet;

Das erfindungsgemäße Verfahren betrifft ein Verfahren zur Herstellung einer Sanitärkomponente, wobei es sich hierbei um einen WC-Sitz, einen WC-Deckel oder einen Urinal-Deckel handeln kann.

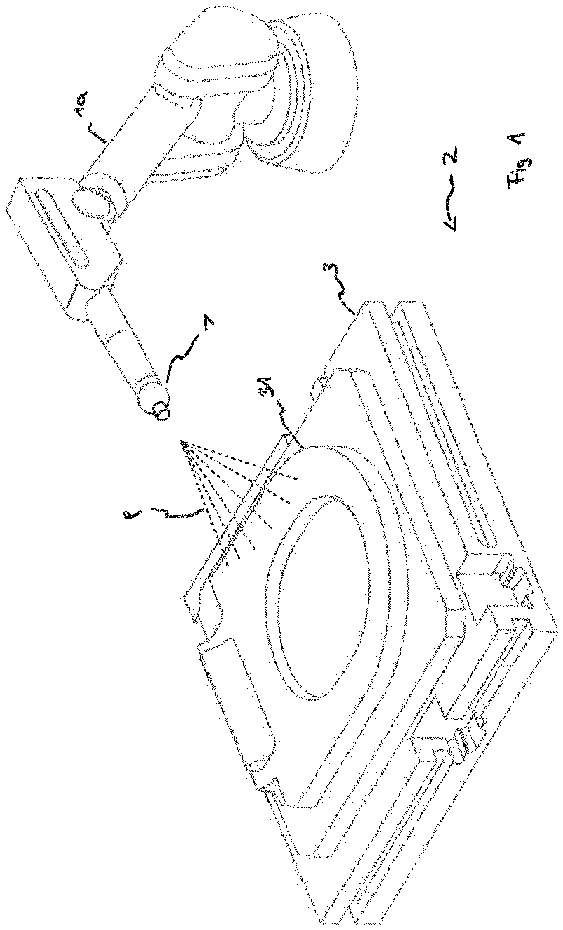

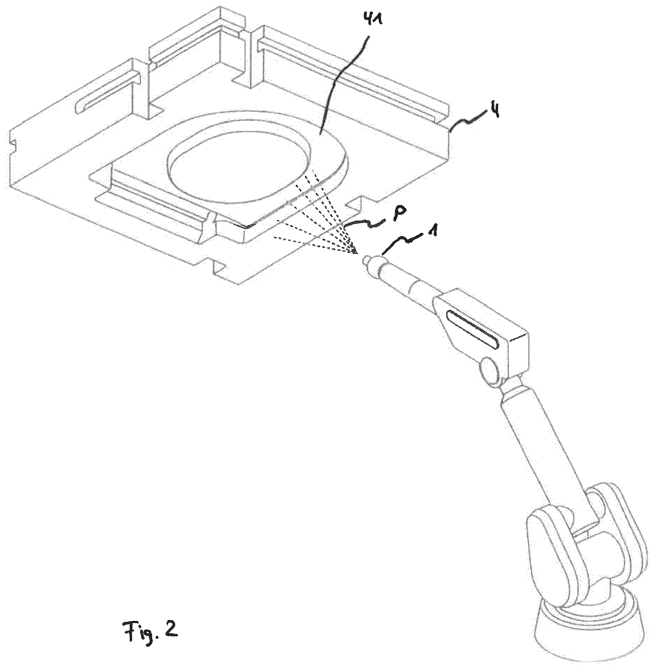

Das erfindungsgemäße Verfahren der unter Bezug auf Figur 1 und Figur 2 erläuterten bevorzugten Ausführungsform dient zur Herstellung eines WC-Sitzes, der umgangssprachlich als WC-Brille bezeichnet wird, wobei die Ausführungsform hierauf nicht beschränkt ist.

Das Verfahren gemäß der bevorzugten Ausführungsform wird mittels eines Werkzeuges durchgeführt.

Das Werkzeug beinhaltet zum einen eine Sprüheinrichtung 1 und eine Werkzeugform 2, wobei letztere aus einem ersten Werkzeugformteil 3 (Figur 1) und einem zweiten Werkzeugformteil 4 aufgebaut ist.

Das erste Werkzeugformteil 3 weist konvexe Strukturen 31 bzw. einen konvexen Abschnitt 31 auf, der mit entsprechenden konkaven Strukturen 41 bzw. einem konkaven Abschnitt 41 des zweiten Werkzeugformteils 4 zusammenpasst.

Das erste Werkzeugformteil 3 und das zweite Werkzeugformteil 4 können zusammengefahren werden, sodass der konvexe Abschnitt 31 und der konkave Abschnitt 41 ineinander eingesetzt sind. In diesem Zustand bilden die Werkzeugformteile 3, 4 einen Hohlraum bzw. Kavität aus, die der äußeren Erscheinungsform des herzustellenden WC-Sitzes entspricht.

Zum Öffnen und Schließen dieser Kavität können die Werkzeugformteile 3 und 4, wie erwähnt zusammengefahren aber auch voneinander entfernt werden. Figuren 1 und 2 zeigen einen Zustand, in dem das erste Werkzeugformteil 3 und das zweite Werkzeugformteil 4 voneinander beabstandet sind und somit die Kavität geöffnet ist.

Eine Innenoberfläche der Werkzeugform 2, die im geschlossenen Zustand der Werkzeugform 2 in die Kavität weist, wird zum einen durch den konvexen Abschnitt 31 des ersten Werkzeugformteils 3 und zum anderen durch den konkaven Abschnitt 41 des zweiten Werkzeugformteils 4 festgelegt. D. h. der konvexe Abschnitt 31 und der konkave Abschnitt 41 bildet jeweils Oberflächenabschnitte der die Kavität definierenden Innenoberfläche der Werkzeugform 2.

Die Werkzeugform 2, d. h. beide Werkzeugformteile 3 und 4, ist beispielsweise aus Stahl ausgebildet und kann durch eine nicht gezeigte Heizeinrichtung auf eine bestimmte Temperatur T aufgeheizt werden.

Die Sprüheinrichtung 1 ist bevorzugt eine Pulversprühpistole, die ein Industrieroboter 1a betätigt. Der Industrieroboter ist eingerichtet, zur Durchführung des erfindungsgemäßen Verfahrens einen Pulverlack sowohl auf den konvexen Abschnitt 31 des Werkzeugformteils 3 und den konkaven Abschnitt 41 des Werkzeugformteils 4 zu sprühen.

Der über die Sprüheinrichtung 1 versprühte Pulverlack P ist bevorzugt elektrostatisch positiv geladen und haftet aufgrund der Aufladung bzw. des Potentialunterschiedes an dem konvexen Abschnitt 31 und dem konkaven Abschnitt 41 der Werkzeugform 2. Wenn die Werkzeugform 2 zu diesem Zeitpunkt bereits aufgeheizt ist, trägt der Temperaturunterschied zwischen Pulverlack P und Werkzeugform 2 auch zur Haftung bei. Auf eine Aufladung bzw. einen Potentialunterschied könnte in diesem Fall verzichtet werden. Die Werkzeugform 2, d. h. dass Werkzeugformteil 3 und das Werkzeugformteil 4, liegt bevorzugt auf Massepotential.

Die elektrostatische Aufladung des Pulverlackes P erfolgt an der Sprüheinrichtung 1 beispielsweise durch Hochspannung (Corona-Aufladung) oder durch Reibung (triboelektrische Aufladung).

Das erfindungsgemäße Verfahren unterteilt sich im Wesentlichen in 4 folgende Schritte:
a) Öffnen der Werkzeugform, die die Kavität definiert, wobei die Kavität der Form der Sanitärkomponente entspricht;
b) Beschichten der die Kavität definierenden Innenoberfläche der Werkzeugform mit einem Beschichtungsmaterial, das in dieser Ausführungsform der Pulverlack ist;
c) Füllen der Kavität mit einem nicht ausgehärteten Faser-Kunstharz-Material, wobei sich das Faser-Kunstharz-Material mit dem Beschichtungsmaterial verbindet;
d) Öffnen der Werkzeugform und Entnehmen der Sanitärkomponente nach zumindest teilweisem Aushärten des Faser-Kunstharz-Materials zu einem Faser-Kunststoff-Verbundmaterial, wobei das Beschichtungsmaterial eine Außenoberfläche der Sanitärkomponente bildet.

In dem Schritt a) wird die Werkzeugform 2 geöffnet, indem das erste Werkzeugformteil 3 und das zweite Werkzeugformteil 4 auseinandergefahren werden. Die Kavität der Werkzeugform 2 ist nach dem Öffnen zugänglich.

Anschließend betätigt der Industrieroboter 1a in dem Schritt b) die Sprüheinrichtung 1 und beschichtet den konvexen Abschnitt 31 des Werkzeugformteils 3 und den konkaven Abschnitt 41 des Werkzeugformteils 4 mit dem Pulverlack P.

Dieser Schritt b) ist in Figuren 1 und 2 gezeigt, wobei der Industrieroboter den konvexen Abschnitt 31 und den konkaven Abschnitt 41 vollständig beschichtet, sodass die endgültige Sanitärkomponente vollumfänglich mit dem Pulverlack beschichtet ist.

Der Pulverlack P ist bevorzugt elektrostatisch geladen und haftet deshalb an dem konvexen Abschnitt 31 des auf Massepotential liegenden Werkzeugformteils 3. Gleichermaßen haftet der elektrostatisch geladene Pulverlack P an dem konkaven Abschnitt 41 des ebenfalls auf Massepotential liegenden Werkzeugformteils 4.

Eine Schichtdicke D des an den Werkzeugformteilen 3, 4 haftenden Pulverlackes liegt bevorzugt in dem Bereich: 40µm ≤ D ≤ 120 µm, wobei die Ausführungsform hierauf nicht beschränkt ist.

Die Werkzeugformteile 3 und 4 werden zeitlich vor, während oder nach dem erläuterten Schritt b) auf eine bestimmte Temperatur T aufgeheizt. Diese Temperatur beträgt bevorzugt zwischen 125 und 150 °C, besonders bevorzugt 132, 133, 134, 135, 136, 137, oder 138 °C.

Der verwendete Pulverlack P basiert bevorzugt auf einem Polyester-Harz, der bei den angegebenen Temperaturen zu schmelzen und zu vernetzen beginnt. Der verwendete Pulverlack kann beispielsweise ein Pulverlack des Unternehmens FreiLacke mit der Spezifikation IMC-Pulverlack PM1005B sein.

Der verwendete Pulverlack ist in seiner Farbe nicht auf Weiß beschränkt. Durch Zugabe entsprechender Farbpigmente können alle gängigen Farben und auch Farbeffekte mit Pulverlacken realisiert werden.

In dem nachfolgenden Verfahrensschritt c) wird ein Faser-Kunstharz-Material auf den konvexen Abschnitt 31 des ersten Werkzeugformteils 3 und/oder den konkaven Abschnitt 41 des zweiten Werkzeugformteils 4 gelegt.

Das Faser-Kunstharz-Material ist bevorzugt BMC oder SMC, das als nicht-ausgehärtetes Gemisch aus Schnittfasern und einem Reaktionsharz vorliegt. Der Unterschied zwischen BMC und SMC liegt darin, dass Ersteres als formlose Masse vorliegt, wohingegen Letzteres plattenförmig ist.

Das Reaktionsharz ist beispielsweise ein Polyester-Harz oder ein Vinylester-Harz. Besonders bevorzugt ist die Verwendung eines Polyester-Harzes für den Fall, dass der Pulverlack unter anderem ein Bindemittel beinhaltet, das ebenfalls auf Polyester-Harz basiert. Noch bevorzugter ist das Reaktionsharz ein ungesättigtes Polyesterharz (UP-Harz).

Das BMC und/oder SMC kann auf den konvexen Abschnitt 31 oder den konkaven Abschnitt 41 zu einem Zeitpunkt gelegt werden, zu dem der auf den genannten Abschnitten 31, 41 haftende Pulverlack noch nicht geschmolzen ist, gerade schmilzt oder bereits vollständig geschmolzen ist.

Anschließend werden die Werkzeugformteile 3 und 4 zusammengefahren, sodass die Werkzeugform 2 geschlossen ist.

Der konvexe Abschnitt 31 und der konkave Abschnitt 41 der Werkzeugformteile pressen hierbei das BMC/SMC in die Kavität der Werkzeugform 2. Die Presskraft beträgt bevorzugt mehrere kN, beispielsweise zwischen 2500 kN und 4000 kN. Das BMC/SMC erhält durch das Pressen in die Kavität die äußere Erscheinungsform des herzustellenden WC-Sitzes und verbindet sich mit dem schmelzenden/geschmolzenen Pulverlack. Alternativ könnte das Faser-Kunstharz-Material, insbesondere das BMC/SMC in die Kavität auch eingespritzt werden.

Das Reaktionsharz bzw. das Matrixmaterial des BMC/SMC härtet durch das Aufheizen der Werkzeugform 2 bzw. bei der Temperatur T zu einem Duroplast-Kunststoff, d.h. dem Faser-Kunststoff-Verbundmaterial, aus und wird dementsprechend steif bzw. rigide. Gleichermaßen härtet bei der Temperatur T und der Presskraft der Pulverlack zu einer Pulverlackschicht aus.

In dem anschließenden Schritt d) wird die Werkzeugform 2 wieder geöffnet, in dem das Werkzeugformteil 3 und das Werkzeugformteil 4 auseinandergefahren werden. Der fertige WC-Sitz kann dann aus der Werkzeugform 2 entnommen werden.

Das Verfahren gemäß der bevorzugten Ausführungsform ist nicht auf die Herstellung des WC-Sitzes beschränkt, sondern lässt sich auch auf die Herstellung des WC-Deckels oder des Urinal-Deckels anwenden. Unterschiedlich ist lediglich die Ausgestaltung der Werkzeugform 2.

Der wesentliche Effekt der Erfindung liegt darin, dass in dem Herstellungsverfahren neben dem Pressen des WC-Sitzes aus BMC/SMC gleichermaßen die Außenoberfläche durch Verwendung des Pulverlackes ausgebildet werden kann. Die durch die Pulverlackschicht ausgebildete Außenoberfläche genügt hohen (ästhetischen) Anforderungen in Bezug auf Glanz, Oberflächenstruktur und Chemikalienbeständigkeit. Je nach Grad der genannten Anforderungen kann ein geeigneter Pulverlack frei gewählt werden.

Bevorzugt lassen sich mit dem erfindungsgemäßen Verfahren auch Logos und Marken auf den entsprechenden Teilen anbringen. Der Industrieroboter 1a beschichtet hierfür bestimmte Abschnitte der herzustellenden Sanitärkomponente.

Die Ausführungen im Allgeneinen Teil vor der Figurenbeschreibung gelten für die vorliegende Ausführungsform entsprechend.

## Patentansprüche

1. Verfahren zur Herstellung einer Sanitärkomponente, wobei die Sanitärkomponente ein WC-Sitz, ein WC-Deckel oder ein Deckel eines Urinals ist, wobei das Verfahren folgende Schritte aufweist:
a) Öffnen einer Werkzeugform, die eine Kavität definiert, wobei die Kavität einer Form der Sanitärkomponente entspricht;
b) Beschichten einer die Kavität definierenden Innenoberfläche der Werkzeugform mit einem Beschichtungsmaterial;
c) Füllen der Kavität mit einem nicht ausgehärteten Faser-Kunstharz-Material, wobei sich das Faser-Kunstharz-Material mit dem Beschichtungsmaterial verbindet;
d) Entnehmen der Sanitärkomponente nach zumindest teilweisem Aushärten des Faser-Kunstharz-Materials in der Kavität zu einem Faser-Kunststoff-Verbundmaterial, wobei das Beschichtungsmaterial eine Außenoberfläche der Sanitärkomponente bildet.

2. Verfahren nach Anspruch 1, wobei
in Schritt b) die Innenoberfläche beschichtet wird, indem ein das Beschichtungsmaterial bildender Pulverlack auf die Innenoberfläche der Werkzeugform gesprüht wird.

3. Verfahren nach Anspruch 2, wobei
in Schritt b) die Werkzeugform auf ein elektrisches Potential, vorzugsweise Massepotential, gelegt wird und der Pulverlack elektrisch aufgeladen, vorzugsweise positiv aufgeladen, auf die Innenoberfläche der Werkzeugform gesprüht wird, wodurch der Pulverlack auf der Innenoberfläche der Werkzeugform haftet.

4. Verfahren nach Anspruch 2 oder 3, wobei
in Schritt b) die Innenoberfläche der Werkzeugform mit dem Pulverlack derart beschichtet wird, dass eine Schichtdicke D der Pulverlackes in folgenden Bereichen liegt:
ix. 40µm ≤ D ≤ OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;
x. 45µm ≤ D ≤ OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;
xi. 50µm ≤ D ≤ OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;
xii. 55µm ≤ D ≤ OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;
xiii. 60µm ≤ D ≤ OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;
xiv. 65µm ≤ D ≤ OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;
xv. 70µm ≤ D ≤ OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist; oder
xvi. 75µm ≤ D ≤ OG, wobei OG gleich 120µm, 125µm, 130µm, 135µm, 140µm, 145µm, 150µm, 155µm, 160µm, 165µm, 170µm, 175µm, 180µm, 185µm, 190µm, 195µm, oder 200µm ist;

5. Verfahren nach einem der Ansprüche 2 bis 4, wobei
in Schritt b) die Werkzeugform aufgeheizt ist auf eine Temperatur T, bei der der Pulverlack aufschmilzt und das in Schritt c) eingefüllte Faser-Kunstharz-Material aushärtet.

6. Verfahren nach Anspruch 5, wobei
die Temperatur T beträgt:
120°C, 121°C, 122°C, 123°C, 124°C, 125°C, 126°C, 127°C, 128°C, 129°C, 130°C, 131°C, 132°C, 133°C, 134°C, 135°C, 136°C, 137°C, 138°C, 139°C, 140°C, 141°C, 142°C, 143°C, 144°C, 145°C, 146°C, 147°C, 148°C, 149°C, 150°C, 151°C, 152°C, 153°C, 154°C, 155°C, 156°C, 157°C, 158°C, 159°C, 160°C, 161°C, 162°C, 163°C, 164°C, 165°C, 166°C, 167°C, 168°C, 169°C, 170°C, 171°C, 172°C, 174°C, 175°C, 176°C, 177°C, 178°C, 179°C, oder 180°C.

7. Verfahren nach Anspruch 6, wobei die Werkzeugform aus einer Vielzahl von Werkzeugformteilen aufgebaut ist und jedes der Werkzeugformteile die Kavität zumindest teilweise definiert,
in Schritt a) die Werkzeugform geöffnet wird, indem die Werkzeugformteile auseinandergefahren werden, sodass die Kavität zugänglich ist,
in Schritt b) der Pulverlack auf die Werkzeugformteile gesprüht wird, derart, dass Abschnitte der Innenoberfläche, die durch die Werkzeugformteile jeweils definiert werden, mit dem Pulverlack beschichtet sind, wobei vor oder nach dem Besprühen der Werkzeugformteile mit dem Pulverlack diese auf die Temperatur T aufgeheizt werden,
in Schritt c) die Kavität gefüllt wird, indem das Faser-Kunstharz-Material auf mindestens eines der Werkzeugformteile aufgebracht wird und anschließend die Werkzeugformteile zusammengefahren werden, so dass das Faser-Kunstharz-Verbundmaterial in die Kavität gepresst wird, wodurch es die Form der Sanitärkomponente annimmt und sich mit dem aufgeschmolzenen Pulverlack verbindet.

8. Verfahren nach einem der vorhergehenden Ansprüche 2 bis 7, wobei
der in Schritt b) verwendete Pulverlack ein Bindemittel aufweist, das Polyesterharz beinhaltet, insbesondere das Bindemittel hierauf basiert; und
das in Schritt c) verwendete Faser-Kunstharz-Material aus einem Verstärkungsfasern einbettenden Harzmaterial gebildet ist, wobei das Harzmaterial ein Polyersterharz beinhaltet.

9. Verfahren nach einem der vorhergehenden Ansprüche 4 bis 8, wobei
in Schritt b) der Pulverlack von einer Robotereinrichtung auf die Innenoberfläche gesprüht wird, und
die Robotereinrichtung die Werkzeugform einer programmierten Bahn folgend abfährt, derart, dass die Schichtdicke D auf der Innenoberfläche gleichmäßig ist.

10. Sanitärkomponente, welche erhältlich ist nach einem Verfahren gemäß einem der Ansprüche 1 bis 9.

11. Werkzeug zur Herstellung einer Sanitärkomponente, wobei die Sanitärkomponente ein WC-Sitz, ein WC-Deckel oder ein Deckel eines Urinals ist, beinhaltend:
eine bevorzugt beheizbare Werkzeugform, die eine Kavität definiert, wobei die Kavität einer Form der Sanitärkomponente entspricht, wobei die Werkzeugform eine Vielzahl von Werkzeugformteile aufweist, die zum Öffnen und Schließen der Kavität auseinander-/zusammengefahren werden können; und
eine Sprüheinrichtung, insbesondere eine Robotereinrichtung, die dazu eingerichtet ist, einen bevorzugt positiv geladenen Pulverlack auf eine die Kavität festlegende Innenoberfläche der Werkzeugform, die bevorzugt auf Massepotential liegt, zu sprühen; wobei
das Werkzeug eingerichtet ist, ein Verfahren nach einem der Ansprüche 1 bis 9 durchzuführen.
